# EUROPÄISCHE PATENTSCHRIFT

(11) **EP 0 368 054 B1**
(45) Veröffentlichungstag und Bekanntmachung des Hinweises auf die Patenterteilung: **09.06.1993**
(21) Anmeldenummer: 89119419.3
(22) Anmeldetag: 19.10.1989
(51) Int. Cl.: G01M 19/00

(54) **Einrichtung zum Prüfen von Anhängerkupplungen unter betriebsähnlichen Belastungsbedingungen, vorzugsweise unter Einschluss der Anhängerkupplungs-Befestigungskonstruktion**
Device for testing the coupling elements of trailers, in particular inclusive of their mounting means, under simulated operative load conditions
Dispositif d'essai d'accouplements de remorques, de préférence avec ses constructions de montage, sous des charges simulant les conditions d'utilisation normales

(30) Priorität: 08.11.1988 DE 3837886
(43) Veröffentlichungstag der Anmeldung: 16.05.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Klock, Jürgen, Dipl.-Ing., D-6111 Otzberg 1 (DE); Fischer, Gerhard, Dr.-Ing., D-6100 Darmstadt (DE); Grubisic, Vatroslav, Dr.-Ing., D-6107 Reinheim 4 (DE)

(56) Entgegenhaltungen:
- SOVIET INVENTION ILLUSTRATED, DERWENT, WEEK 8826, 02 JULY 1988, LONDON , GB & SU-A-1357747 (NAMI CAR TEST STATI)
- SOVIET INVENTION ILLUSTRATED, DERWENT, WEEK 8542, 22 NOV. 1985 ,LONDON , GB & SU- A-1150513 (MYTISHCHINSK MILITA)

## Beschreibung

Die Erfindung betrifft eine Einrichtung zum Prüfen von Anhängerkupplungen, welche über eine an der Deichsel eines Anhängers angebrachte Zugöse eine Zugkraft auf den Anhänger übertragen, unter betriebsähnlichen Belastungsbedingungen, vorzugsweise unter Einschluß der Anhängerkupplungs-Befestigungskonstruktion, insbesondere des Schlußquerträgers, an dem die Anhängerkupplung befestigt ist, und gegebenenfalls von Rahmenteilen, die an den Schlußquerträger angrenzen.

Zum Verbinden von Anhänger mit Zugfahrzeugen dienen Anhängerkupplungen, die bei Nutzfahrzeugen vorwiegend an einem sogenannten Schlußquerträger befestigt sind, der als, bezogen auf die Fahrtrichtung, letzter von mehreren Querträgern vorgesehen ist, die eine Verbindung zwischen zwei Längsträgern bilden.

Bei den bisher verwendeten Anhängern ist die Deichsel in vertikaler Richtung gelenkig gelagert, so daß im Betriebseinsatz, d.h. beim Fahren eines Zugfahrzeugs mit Anhänger nur Längskraftbelastung auf die Anhängerkupplung und den Schlußquerträger ausgeübt werden, d.h. Belastungen, die in Längsrichtung der Deichsel wirken.

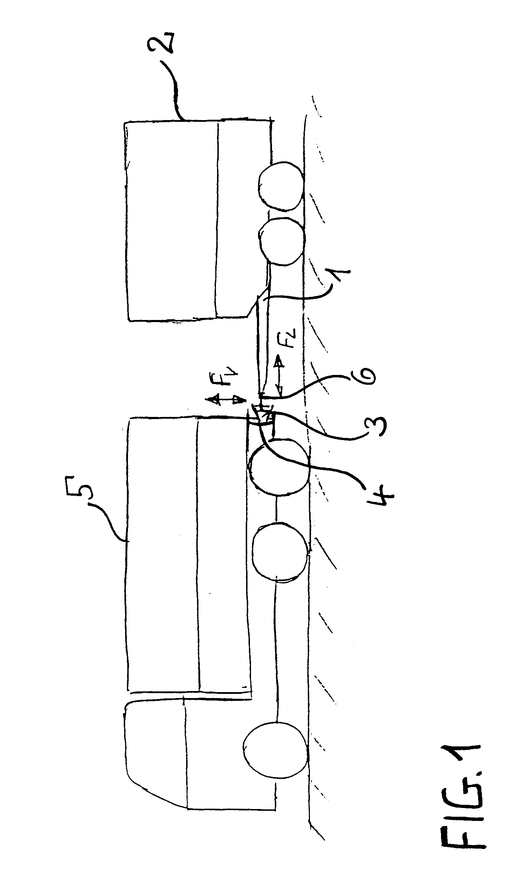

Bei neueren Anhängertypen ist, wie in Figur 1 dargestellt, die Deichsel 1 starr mit dem Anhänger 2 verbunden, so daß neben den Längskräften F_{L} auch hohe Vertikalkräfte F_{V} in der Anhängerkupplung 3 erzeugt werden, die am Schlußquerträger 4 des Zugfahrzeugs 5 befestigt und über eine am vorderen Ende der Deichsel 1 befindliche Zugöse 6 mit dem Anhänger 2 verbunden ist. Solche Vertikalkräfte treten beispielsweise dann auf, wenn die Hinterachse des Zugfahrzeugs 5 über ein Hindernis fährt und die vertikale Bewegung dem Massenträgheitsmoment des Anhängers 2 entgegenwirkt. Hingegen sind die auftretenden Seitenkräfte, d.h. diejenigen Kräfte, die senkrecht zu den Längskräften F_{L} und den Vertikalkräften F_{V} auf die Anhängerkupplung 3 und über diese auf den Schlußquerträger 4 wirken, vernachlässigbar gering.

Die Vertikalkräfte F_{V} führen zu einer hohen Biegebeanspruchung der Anhängerkupplung und zur Biegung des Schlußquerträgers. Dabei können sämtliche Kombinationen aus Vertikalkraft F_{V} und Längskraft F_{L} auftreten, was eine entsprechende Dimensionierung der Anhängerkupplung und der Anhängerkupplungs-Befestigungskonstruktion, insbesondere des Schlußquerträgers und gegebenenfalls der Längsträger erfordert. Die zu diesem Zweck durchgeführte Prüfung von bisherigen Anhängerkupplungen erfolgte nur durch Beaufschlagung mit wechselnder Längskraft, um einen entsprechenden Betriebsfestigkeitsnachweis zu erbringen.

Aufgabe der vorliegenden Erfindung ist es insbesondere, eine Einrichtung zum Prüfen von Anhängerkupplungen unter betriebsähnlichen Belastungsbedingungen, vorzugsweise unter Einschluß der Anhängerkupplungs-Befestigungskonstruktion, insbesondere des Schlußquerträgers, an dem die Anhängerkupplung befestigt ist, und gegebenenfalls von sonstigen Rahmenteilen, die an den Schlußquerträger angrenzen, zur Verfügung zu stellen, die einen Betriebsfestigkeitsnachweis unter multiachsialer Belastung der Anhängerkupplungen und vorzugsweise auch ihrer Befestigung gestattet. Insbesondere soll es in dieser Einrichtung unter Verwendung des Schlußquerträgers und der Anhängerkupplungen, wie sie für Zentralachs-Anhänger vorgesehen sind, ermöglicht werden, einen Schwingfestigkeitsnachweis bzw. eine Schwingfestigkeitsprüfung unter gegenseitig überlagerten Längs- und Vertikalkräften durchzuführen, wobei auch die im praktischen Betrieb auftretenden zeitlichen Korrelationen zwischen unterschiedlichen Vertikal- und Längskräften simuliert werden können sollen, um sämtliche Bereiche der erwähnten Bauteile betriebsähnlich zu beanspruchen und damit zu prüfen.

Diese Aufgabe wird mit einer Einrichtung der eingangs genannten Art erfindungsgemäß dadurch gelöst, daß eine Längskrafterzeugungseinrichtung, welche einer in der Zugkraftwirkungsrichtung der Verbindung zwischen der Anhängerkupplung und der Zugöse wirkende Längskraft F_{L} erzeugt und eine Vertikalerzeugungseinrichtung, welche eine senkrecht oder angenähert senkrecht zu der Zugkraftwirkungsrichtung verlaufende Vertikalkraft F_{V} erzeugt, an ein Kraftübertragungs-Verbindungsteil, an dem die Zugöse befestigbar ist, derart angekoppelt sind, daß sich die Wirkungsrichtung der von der Vertikalkrafterzeugungseinrichtung auf das Kraftübertragungs-Verbindungsteil ausgeübten Vertikalkraft F_{V} und die Wirkungsrichtung der von der Längskrafterzeugungseinrichtung auf das Kraftübertragungs-Verbindungsteil ausgeübten Längskraft F_{L} im Bereich der Befestigungsstelle, an welcher die Zugöse an der ortsfest halterbaren Anhängerkupplung befestigbar ist, schneiden.

Auf diese Weise ist es möglich, die Anhängerkupplung gleichzeitig praktisch beliebigen Kombinationen aus einer Längskraft F_{L} und einer Vertikalkraft F_{V} auszusetzen und damit alle bei der praktischen Benutzung eines Anhängers unter verschiedensten Beladungsbedingungen, einschließlich maximaler Beladung, vorkommenden Belastungen zu simulieren und so zuverlässige Daten für die Dimensionierung der Anhängerkupplung zu gewinnen, und zwar auch für die Anhängerkupplungs-Befestigungskonstruktion, insbesondere des Schlußquerträgers, da die Anhängerkupplung zusammen mit ihrer Befestigungskonstruktion den erwähnten Längskraft-Vertikalkraft-Kombinationen ausgesetzt werden kann.

Zu dem letzteren Zweck ist die erfindungsgemäße Einrichtung vorzugsweise so ausgebildet, daß eine Einspannvorrichtung als Längsträgereinspannvorrichtung ausgebildet ist, in der die Längsträger, welche an dem die Anhängerkupplung befestigenden Schlußquerträger angebracht sind, einspannbar sind, und zwar derart, daß die Längsträger nur an definierten Längspositionen eingespannt werden, die vom Schlußquerträger entfernt sind, so daß die Anhängerkupplung gewissermaßen freitragend über den Schlußquerträger und die Endbereiche des Längsträgers aufgehängt ist, wie es im wesentlichen der Anhängerkupplungs-Befestigungskonstruktion bei Zugfahrzeugen entspricht.

Ein besonders gedrängter Aufbau der erfindungsgemäßen Einrichtung wird in diesem Falle dadurch erreicht, daß der Schlußquerträger derart an den einen Längsträgerenden angebracht ist, daß die daran befestigte Anhängerkupplung nach den anderen Längsträgerenden zu gerichtet ist, in deren Bereich eine Haltevorrichtung für die Längskrafterzeugungseinrichtung angebracht sein kann, wobei diese Haltevorrichtung insbesondere ein Querträger sein kann, an dem das der Anhängerkupplung abgewandte Ende der Längskrafterzeugungseinrichtung befestigt ist.

In diesem Fall kann die Einspannvorrichtung so ausgebidet sein, daß sie die den erwähnten Querträger, die beiden Längsträger und den Schlußquerträger umfassende Befestigungskonstruktion für die Anhängerkupplung einerseits und die Längskrafterzeugungseinrichtung einschließlich Kraftübertragungs-Verbindungsteil und Zugöse andererseits an der Stelle des Querträgers und in einer zwischen dem Kraftübertragungs-Verbindungsteil und dem Querträger befindlichen Längsposition der Längsträger einspannt.

In einer bevorzugten Ausführungsform ist das Kraftübertragungs-Verbindungsteil als Winkelstück mit zwei einen rechten Winkel miteinander einschließenden Schenkeln ausgebildet, wobei an dem einen dieser Schenkel die Längskrafterzeugungseinrichtung angreift und die Zugöse befestigbar ist, während an dem anderen dieser Schenkel die Vertikalkrafterzeugungseinrichtung angreift.

Die Längskrafterzeugungseinrichtung und die Vertikalkrafterzeugungseinrichtung sind jeweils gelenkig mit dem Kraftübertragungs-Verbindungsteil und/oder ihrer jeweiligen Haltevorrichtung verbunden.

Wenn diese gelenkigen Verbindungen Axialgelenke sind, deren Gelenkachsen gleichzeitig senkrecht zur Wirkungsrichtung sowohl der Längskraft F_{L} als auch der Vertikalkraft F_{V} sind, bedarf es keiner besonderen Führung für das Kraftübertragungs-Verbindungsteil.

Es ist jedoch auch möglich, andere gelenkige Verbindungen hierfür zu verwenden, beispielsweise auch kurze Bleche, die in der Wirkungsrichtung der jeweiligen Kraft, nämlich der Längskraft F_{L} bzw. der Vertikalkraft F_{V} biegbar sind, in welchen Fällen es vorgesehen ist, daß das Kraftübertragungs-Verbindungsteil, insbesondere das erwähnte Winkelstück, in der Wirkungsrichtung der Längskraft F_{L} und/oder in der Wirkungsrichtung der Vertikalkraft F_{V} geführt ist. Insbesondere kann das Kraftübertragungs-Verbindungsteil, in der die Wirkungsrichtung der Längskraft F_{L} und die Wirkungsrichtung der Vertikalkraft F_{V} enthaltenden Ebene oder in einer zu dieser Ebene parallelen Ebene geführt sein, so daß es innerhalb dieser Ebene schwenkbar ist, wozu die Führung als Seitenführung für das Kraftübertragungs-Verbindungsteil ausgebildet sein kann. Dann können z.B. auch Kugelgelenke verwendet werden.

Schließlich sei noch erwähnt, daß die Längskrafterzeugungseinrichtung und/oder die Vertikalkrafterzeugungseinrichtung bevorzugt jeweils eine servohydraulische Kolben-Zylinder-Einrichtung ist.

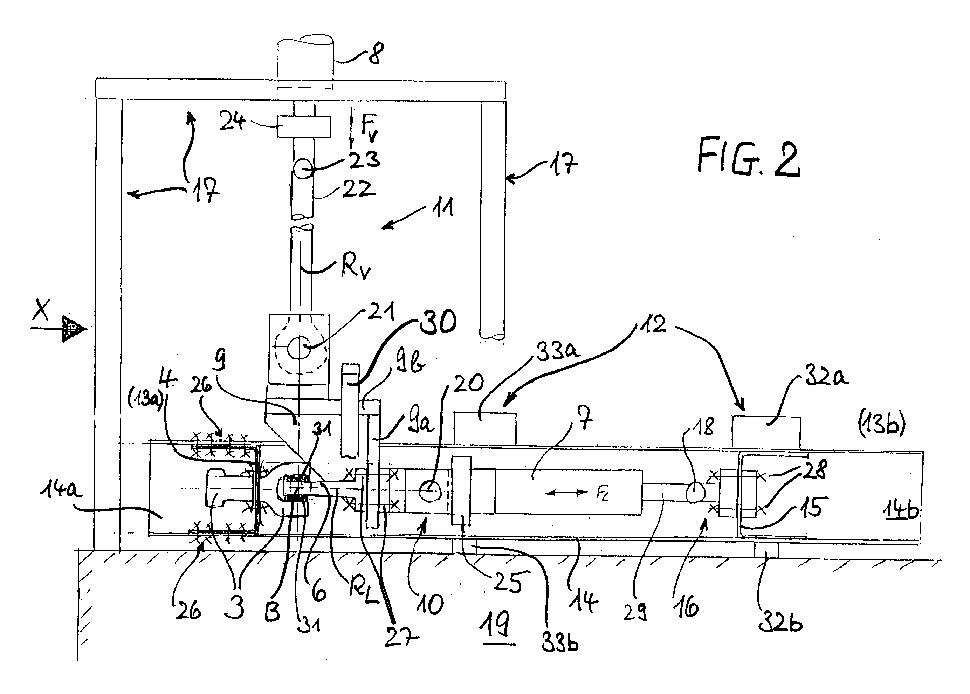

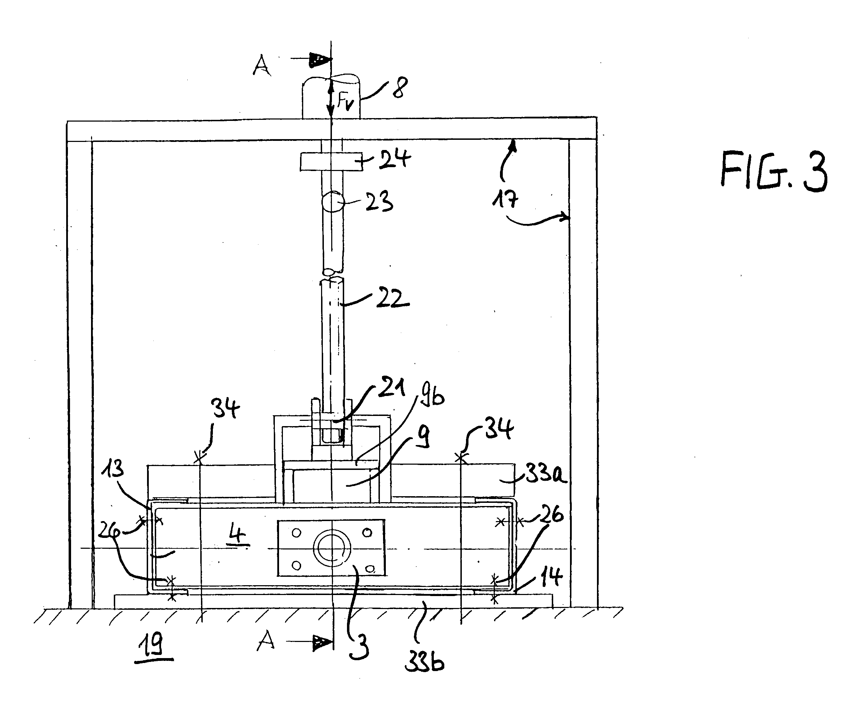

Die Erfindung sei nachstehend anhand einer in den Figuren 2 und 3 der Zeichnung dargestellten, besonders bevorzugten Ausführungsform näher erläutert; es zeigen:
- Figur 1: eine Seitenansicht eines Zugfahrzeugs mit einem Anhänger, der über eine starr daran angebrachte Deichsel mittels einer Anhängerkupplung mit dem Zugfahrzeug verbunden ist;
- Figur 2: einen Schnitt längs der Linie A-A der Figur 3 durch eine bevorzugte Ausführungsform einer erfindungsgemäßen Einrichtung;
- Figur 3: eine Stirnansicht auf die in Figur 2 gezeigte Ausführungsform der erfindungsgemäßen Einrichtung.

Es sei nun näher auf die Figuren 2 und 3 Bezug genommen, um die darin gezeigte Ausführungsform einer Einrichtung zum Prüfen von Anhängerkupplungen unter betriebsähnlichen Belastungsbedingungen einschließlich der Anhängerkupplungs-Befestigungskonstruktion im einzelnen zu beschreiben:

Diese Einrichtung, die auch als Versuchseinrichtung zum Betriebsfestigkeitsnachweis multiaxial belasteter Anhängerkupplungen und ihrer Befestigung bezeichnet werden kann, umfaßt in der dargestellten Ausführungsform folgende Hauptteile:
(a) Eine Längskrafterzeugungseinrichtung 7, welche eine Längskraft F_{L} erzeugt, die in der Zugkraftwirkungsrichtung der Verbindung zwischen einer zu prüfenden Anhängerkupplung 3 und der damit verbundenen Zugöse 6 wirkt.
(b) Eine Vertikalkrafterzeugungseinrichtung 8, die eine Vertikalkraft F_{V} erzeugt, welche senkrecht oder angenähert senkreckt zu der erwähnten Zugkraftwirkungsrichtung verläuft.
(c) Ein Kraftübertragungs-Verbindungsteil 9, an dem die Zugöse 6 befestigbar ist.
(d) Eine Längskraftankopplungsvorrichtung 10, welche die Längskrafterzeugungseinrichtung 7 mit dem Kraftübertragungs-Verbindungsteil 9 verbindet und die erzeugte Längskraft F_{L} auf letzteres überträgt.
(e) Eine Vertikalkraftankopplungsvorrichtung 11, welche die Vertikalkrafterzeugungseinrichtung 8 mit dem Kraftübertragungs-Verbindungsteil 9 verbindet und die Vertikalkraft F_{V} auf letzteres überträgt.
(f) Eine Einspannvorrichtung 12 zum ortsfesten Einspannen der Anhängerkupplung 3 einschließlich der Anhängerkupplungs-Befestigungskonstruktion, die vorliegend den Schlußquerträger 4 und zwei Längsträger 13, 14 umfaßt, wobei der Schlußquerträger 4 im Bereich der einen Längsträgerenden 13a, 14a an den Längsträgern 13, 14 in der Weise befestigt ist, daß die Anhängerkupplung 3 den anderen Längsträgerenden 13b, 14b zugewandt ist, in deren Bereich die beiden Längsträger 13, 14 mittels eines Querträgers 15 miteinander verbunden sind.
(g) Eine Haltevorrichtung 16 für die Längskrafterzeugungseinrichtung 7, wobei diese Haltevorrichtung vorliegend im wesentlichen von dem eben erwähnten Querträger 15 gebildet ist, an welchem das der Anhängerkupplung 3 abgewandte Ende der Längskrafterzeugungseinrichtung 7 über ein Gelenk 18 befestigt ist, wodurch die Längskrafterzeugungseinrichtung 7, abgesehen von ihrer geringfügigen Schwenkbewegung um das Gelenk 18, ortsfest gehaltert ist.
(h) Eine Haltevorrichtung 17 zum ortsfesten Befestigen der Vertikalkrafterzeugungseinrichtung 8, die vorliegend als Belastungsrahmen ausgebildet ist, der, ebenso wie die Einspannvorrichtung 12 am Fundament 19 angebracht ist.

In diesem Aufbau sind die Längskrafterzeugungseinrichtung 7 und die Vertikalkrafterzeugungseinrichtung 8 über die Längskraftankopplungsvorrichtung 10 bzw. die Vertikalkraftankopplungsvorrichtung 11 derart an das Kraftübertragungs-Verbindungsteil 9 angekoppelt, daß sich die Wirkungsrichtung R_{V} der von der Vertikalkrafterzeugungseinrichtung 8 auf das Kraftübertagungs-Verbindungsteil 9 ausgeübten Vertikalkraft F_{V} und die Wirkungsrichtung R_{L} der von der Längskrafterzeugungseinrichtung 7 auf das Kraftübertragungs-Verbindungsteil 9 ausgeübten Längskraft F_{L} im Bereich der Befestigungsstelle B, vorzugsweise genau in der Befestigungsstelle, schneiden, an welcher die Zugöse 6 an die Anhängerkupplung 3 angekoppelt ist.

In der vorliegenden Ausführungsform ist das Kraftübertragungs-Verbindungsteil 9 als Winkelstück ausgebildet, welches einen ersten Schenkel 9a und einen zweiten Schenkel 9b aufweist, die miteinander einen rechten Winkel einschließen und von denen die Ebene des ersten Schenkels 9a senkrecht zur Längskraft F_{L} verläuft, während die Ebene des zweiten Schenkels 9b senkrecht bzw. im wesentlichen senkrecht zur Vertikalkraft F_{V} verläuft. An der einen Seite des ersten Schenkels 9a ist die Zugöse 6 befestigt, während an der entgegengesetzten Seite dieses Schenkels 9a die Längskrafterzeugungseinrichtung 7 über ein Gelenk 20 angreift. An dem zweiten Schenkel 9b greift die Vertikalkrafterzeugungseinrichtung 8 über ein Gelenk 21 an, das mittels einer Stange 22 und eines weiteren Gelenks 23 sowie einer Kraftmeßeinrichtung 24,insbesondere eine Kraftmeßdose, mit der Vertikalkrafterzeugungseinrichtung 8 verbunden ist. In entsprechender Weise ist zwischen der Längskrafterzeugungseinrichtung 7 und dem Gelenk 20 eine Kraftmeßeinreichtung 25, insbesondere eine Kraftmeßdose, vorgesehen, so daß mit den Kraftmeßeinrichtungen 24 und 25 die Vertikalkraft F_{V} bzw. die Längskraft F_{L} gemessen und mittels entsprechender Aufzeichnungsgeräte in ihren zeitlichen Verläufen und Kombinationen aufgezeichnet werden können.

Wie in der Zeichnung durch x-x-Zeichen nur angedeutet, sind der Schlußquerträger 4 und die Längsträger 13, 14 mittels Schrauben 26 miteinander verbunden. Entsprechende Schraubverbindungen 27 sind zwischen der Zugöse 6, dem Schenkel 9a und der Längskraftankopplungsvorrichtung 10 dargestellt, und weiter sind Schraubverbindungen 28 zwischen dem Querträger 15 und der von diesem zur Längskrafterzeugungseinrichtung 7 verlaufenden Verbindung 29, in welcher das Gelenk 18 vorgesehen ist, angedeutet. Selbstverständlich sind damit nicht alle Schraubverbindungen in der dargestellten Ausführungsform erfaßt.

Bei 30 ist eine Führung für das Kraftübertragungs-Verbindungsteil 9 angedeutet, welche dieses so führt, daß es sich nur in der Zeichnungsebene oder einer hierzu parallelen Ebene bewegen kann, also in einer Ebene, welche die Wirkungsrichtung R_{V} der Vertikalkraft F_{V} und die Wirkungsrichtung R_{L} der Längskraft F_{L} enthält oder parallel zu dieser Ebene ist. Auf diese Weise werden nur Längskräfte F_{L} und Vertikalkräfte F_{V} sowie die Kombinationen solcher Kräfte, jedoch keine Seitenkräfte auf die Anhängerkupplung 3 übertragen, wobei das Kraftübertragungs-Verbindungsteil 9 Biegungen des Schlußquerträgers 4 und/oder der Längsträgerenden 13a, 14a bzw. der Längsträger 13, 14 folgen kann.

Zur Vermeidung hoher Zylinderwege des Zylinders der Vertikalkrafterzeugungseinrichtung 8 kann das Spiel zwischen der Zugöse 6 und der Kupplung 3 durch Zwischenstücke 31 ausgeglichen werden.

Die Einspannvorrichtung 12 weist Paare von Einspannstücken 32a, 32b sowie 33a, 33b auf, zwischen denen die Längsträger 13, 14 eingespannt sind. Diese Einspannstücke sind in ihrer Dimension, die der Längsrichtung der Längsträger 13, 14 entspricht, wesentlich kürzer als die Längsträger 13, 14 und so angeordnet, daß sie die Längsträger 13, 14 an Positionen einspannen, die entfernt von dem Schlußquerträger 4 sind.

Im vorliegenden Fall ist das Paar von Einspannstücken 32a, 32b im Bereich des Querträgers 15 vorgesehen, während das Paar von Einspannstücken 33a, 33b im Bereich zwischen dem Kraftübertragungs-Verbindungsteil 9 und dem Paar von Einspannstücken 32a, 32b positioniert ist. Die zusammengehörigen Einspannstücke 32a, 32b bzw. 33a, 33b sind mittels Schraubverbindungen 34 miteinander verbunden.

Die hier vorgeschlagene, beschriebene und dargestellte sowie beanspruchte Einrichtung hat insbesondere folgende Vorteile:
(1) Die im Betrieb von Anhängerkupplungen auftretenden zeitlichen Korrelationen zwischen unterschiedlichen Vertikal-und Längskräften können praktisch beliebig simuliert werden, um sämtliche Bereiche der Anhängerkupplung, des Schlußquerträgers und der Verbindung zu den Längsträgern betriebsähnlich zu beanspruchen.
(2) Es wird eine gedrängte Bauweise mit der Einrichtung erreicht, indem zu Simulation der im Betrieb auftretenden Belastung die Anhängerkupplung mit dem Schlußquerträger in zwei Originallängsträgern umgekehrt eingebaut wird (anstatt daß die Kupplung in Figur 2 nach links gewandt ist, wie es dem Einbau in ein Kraftfahrzeug entsprechen würde, ist sie nach rechts gewandt, wodurch gleiche Biegebeanspruchungsverhältnisse wie in der Praxis gewährleistet sind).
(3) Die infolge der Durchbiegung der Anhängerkupplung und/oder des Schlußquerträgers und/oder der Längsträger unter der Vertikalkraft auftretenden Bewegungen des Kraftübertragungs-Verbindungsteils 9 werden durch die Gelenke 18, 20, 21 und 23 ausgeglichen, so daß eine Drehbewegung der Kupplung 3 unter Belastung möglich ist, wobei die Gelenke 18, 20, 21 und 23 vorzugsweise Axialgelenke sind, deren Achse senkrecht zu der Ebene verläuft, in welcher die Wirkungsrichtungen R_{V} und R_{L} der Vertikalkraft F_{V} und der Längskraft F_{L} verlaufen.
(4) Eine dem praktischen Betrieb vergleichbare Verformung des Schlußquerträgers wird auch dadurch erreicht, daß dieser in Originallängsträgern angeordnet ist und daß die Originallängsträger so eingespannt werden, daß sich das hintere Ende derselben, an denen die Anhängerkupplung und der Schlußquerträger befestigt sind, unter den Biegekräften, die durch Vertikalkraft F_{V} und Längskraft F_{L} hervorgerufen werden, frei verformen kann. Weiter ist es möglich, auch die Verbindung zwischen dem Schlußquerträger und den Längsträgern mit zu untersuchen.
(5) Bei Ermüdungsschäden in den Längsträgern kann der gesamte Teil der Einrichtung, der sich zwischen den Längsträgern befindet, in der Längsrichtung der Längsträger verschoben und an anderen Stellen der Längsträger befestigt werden, d.h. die Befestigungstelle des Schlußquerträgers 4 und die Befestigungsstelle des Querträgers 15 können in Längsrichtung der Längsträger 13, 14 zu neuen Prüfungen verschoben werden.

Es sei hier darauf hingewiesen, daß das der Anhängerkupplung abgewandte Ende der Längskrafterzeugungseinrichtung nicht notwendigerweise an den Längsträgern befestigt werden muß, obwohl das wegen des günstigen Aufbaus bevorzugt wird.

## Patentansprüche

1. Einrichtung zum Prüfen von Anhängerkupplungen (3), welche über eine an der Deichsel (1) eines Anhängers (2) angebrachte Zugöse (6) eine Zugkraft auf den Anhänger (2) übertragen, unter betriebsähnlichen Belastungsbedingungen, vorzugsweise unter Einschluß der Anhängerkupplungs-Befestigungskonstruktion (4,13,14,26), insbesondere des Schlußquerträgers (4), an dem die Anhängerkupplung (3) befestigt ist, und gegebenenfalls von Rahmenteilen (13,14), die an den Schlußquerträger (4) angrenzen, wobei eine Längskrafterzeugungseinrichtung (7), welche eine in der Zugkraftwirkungsrichtung der Verbindung zwischen der Anhängerkupplung (3) und der Zugöse (6) wirkende Längskraft (F_{L}) erzeugt, und eine Vertikalkrafterzeugungseinrichtung (8), welche eine senkrecht oder angenähert senkrecht zu der Zugkraftwirkungsrichtung verlaufende Vertikalkraft (F_{V}) erzeugt, an ein Kraftübertragungs-Verbindungsteil (9), an dem die Zugöse (6) befestigbar ist, derart angekoppelt sind, daß sich die Wirkungsrichtung (R_{V}) der von der Vertikalkrafterzeugungseinrichtung (8) auf das Kraftübertragungs-Verbindungsteil (9) ausgeübten Vertikalkraft (F_{V}) und die Wirkungsrichtung (R_{L}) der von der Längskrafterzeugungseinrichtung (7) auf das Kraftübertragungs-Verbindungsteil (9) ausgeübten Längskraft (F_{L}) im Bereich der Befestigungsstelle (B), an welcher die Zugöse (6) an der ortsfest halterbaren Anhängerkupplung (3) befestigbar ist, schneiden.

2. Einrichtung nach Anspruch 1, dadurch **gekennzeichnet**, daß das Kraftübertragungs-Verbindungsteil (9) ein Winkelstück mit zwei einen rechten Winkel miteinander einschließenden Schenkeln (9a, 9b) ist, wobei an dem einen dieser Schenkel (9a) die Längskrafterzeugungseinrichtung (7) angreift und die Zugöse (6) befestigbar ist, während an dem anderen dieser Schenkel (9b) die Vertikalkrafterzeugungseinrichtung (8) angreift.

3. Einrichtung nach Anspruch 1 oder 2, dadurch **gekennzeichnet**, daß das Kraftübertragungs-Verbindungsteil (9) in der Wirkungsrichtung (R_{L}) der Längskraft (F_{L}) und/oder in der Wirkungsrichtung (R_{V}) der Vertikalkraft (F_{V}) geführt ist.

4. Einrichtung nach Anspruch 1 oder 2, dadurch **gekennzeichnet**, daß das Kraftübertragungs-Verbindungsteil (9) in der die Wirkungsrichtung (R_{L}) der Längskraft ( F_{L}) und die Wirkungsrichtung (R_{V}) der Vertikalkraft (F_{V}) enthaltenden Ebene oder in einer zur letzteren parallelen Ebene geführt ist.

5. Einrichtung nach einem der Ansprüche 1 bis 4, dadurch **gekennzeichnet**, daß eine Einspannvorrichtung (12) vorgesehen ist, in der die Längsträger (13,14), welche an dem die Anhängerkupplung (3) befestigenden Schlußquerträger (4) anbringbar sind, und an denen vorzugsweise eine Haltevorrichtung (16) für die Längskrafterzeugungseinrichtung (7), insbesondere ein letztere befestigender Querträger (15), angebracht ist, einspannbar sind, und zwar vorzugsweise an von dem Schlußquerträger (4) entfernten Längsstellen der Längsträger (13,14).

6. Einrichtung nach Anspruch 5, dadurch **gekennzeichnet**, daß der Schlußquerträger (4) derart an den einen Längsträgerenden (13a,14a) anbringbar ist, daß die daran befestigte Anhängerkupplung (3) nach den anderen Längsträgerenden (13b,14b) zu gerichtet ist, in deren Bereich die Haltevorrichtung (16), insbesondere der Querträger (15), für die Langskrafterzeugungseinrichtung (7) angebracht ist.

7. Einrichtung nach Anspruch 5 oder 6, dadurch **gekennzeichnet**, daß der Schlußquerträger (4) und die Haltevorrichtung (16), insbesondere der Querträger (15), für die Längskrafterzeugungseinrichtung (7) je an verschiedenen Stellen in Längsrichtung der Längsträger (13,14) an den Längsträgern (13,14) befestigbar sind.

8. Einrichtung nach einem der Ansprüche 1 bis 7, dadurch **gekennzeichnet**, daß die Längskrafterzeugungseinrichtung (7) und die Vertikalkrafterzeugungseinrichtung (8) gelenkig (18,20,21,23) mit dem Kraftübertragungs-Verbindungsteil (9) und/oder ihrer jeweiligen Haltevorrichtung (16,17) verbunden ist.

9. Einrichtung nach Anspruch 8, dadurch **gekennzeichnet**, daß als gelenkige Verbindungen (18,20,21,23) Achsengelenke vorgesehen sind, deren Gelenkachsen gleichzeitig senkrecht zur Wirkungsrichtung (R_{L},R_{V}) sowohl der Längs- (F_{L}) als auch der Vertikalkraft (F_{V}) sind.

10. Einrichtung nach einem der Ansprüche 1 bis 9, dadurch **gekennzeichnet**, daß die Längskrafterzeugungseinrichtung (7) und/oder die Vertikalkrafterzeugungseinrichtung (8) eine servohydraulische Kolben-Zylinder-Einrichtung ist.

## Claims

1. An apparatus for testing trailer couplings (3), which transmit a tractive force to a trailer (2) by way of a traction eye (6) mounted on the thill (1) of the trailer (2). under load conditions similar to those existing during operation, preferably including the trailer coupling attachment construction (4, 13, 14, 26), particularly the end cross member (4) to which the trailer coupling (3) is secured and possibly frame parts (13, 14) which adjoin the end cross member (4), wherein a longitudinal force generator (7) which generates a longitudinal force (F_{L}) acting in the effective direction of the tractive force of the connection between the trailer coupling (3) and the traction eye (6), and a vertical force generator (6) which generates a vertical force (F_{V}) acting at right angles to, or substantially at right angles to, the effective direction of the tractive force, are coupled to a force transmission connection part (9), to which the traction eye (6) is secured, in such a way that the effective direction (R_{V}) of the vertical force (F_{V}) exerted on the force transmission connection part (9) by the vertical force generator (8), and the effective direction (R_{L}) of the longitudinal force (F_{L}) exerted on the force transmission connection part (9) by the longitudinal force generator (7), intersect in the region of the fastening point (B) at which the traction eye (6) can be secured to the fixedly mountable trailer coupling (3).

2. An apparatus as claimed in claim 1, characterised in that the force transmission connection part (9) is an angle member having two limbs (9a, 9b) forming a right angle with one another, wherein the longitudinal force generator (7) acts upon, and the traction eye (6) is securable to, one of these limbs (9a), while the vertical force generator (8) acts upon the other one of these limbs (9b).

3. An apparatus as claimed in claim 1 or 2, characterised in that the force transmission connection part (9) is guided in the effective direction (R_{L}) of the longitudinal force (F_{L}) and/or in the effective direction (R_{V}) of the vertical force (F_{V}).

4. An apparatus as claimed in claim 1 or 2, characterized in that the force transmission connection part (9) is guided in the plane containing the effective direction (R_{L}) of the longitudinal force (F_{L}) and the effective direction (R_{V}) of the vertical force (F_{V}) or in a plane parallel to the latter plane.

5. An apparatus as claimed in one of the claims 1 to 4, characterized in that there is provided a clamping device (12) in which the longitudinal members (13, 14), which are mountable on the end cross member (4) securing the trailer coupling (3), and on which preferably a holding device (16) for the longitudinal force generator (7), particularly a cross member (15) securing the latter, are clampable, namely preferably at longitudinal points of the longitudinal members (13, 14) which are remote from the end cross member (4).

6. An apparatus as claimed in claim 5, characterised in the the end cross member (4) is mountable on one of the ends (13a, 14a) of the longitudinal members in such a way that the trailer coupling (3) secured thereto is directed towards the other ends (13b ,14b) of the longitudinal members in whose region the holding device (16), particularly the cross member (15), for the longitudinal force generator (7), is mounted.

7. An apparatus as claimed in claim 5 or 6, characterised in that the end cross member (4) and the holding device (16), particularly the cross member (15), for the longitudinal force generator (7), are each securable to the longitudinal members (13, 14) at different points in the longitudinal direction of the longitudinal members (13, 14).

8. An apparatus as claimed in one of the claims 1 to 7, characterised in that the longitudinal force generator (7) and the vertical force generator (8) are hinged (18, 20, 21, 23) to the force transmission connection part (9) and/or their respective holding device (16, 17).

9. An apparatus as claimed in claim 8, characterised in that axle joints (18, 20, 21, 23) are provided as hinged connections and their articulated axles are at the same time at right angles to the effective direction (R_{L}, R_{V}) of the longitudinal force ((F_{L}) and of the vertical force (F_{V}).

10. An apparatus as claimed in one of the claims 1 to 9, characterised in the longitudinal force generator (7) and/or the vertical force generator (8) is a servo-hydraulic piston and cylinder arrangement.

## Revendications

1. Dispositif pour contrôler des attelages de remorques (3), qui transmettent, par l'intermédiaire d'un oeillet de traction (6) installé sur le timon (1) d'une remorque (2), une force de traction à la remorque (2), dans des conditions de charge analogues à celle du fonctionnement, y compris de préférence une structure (4,13,14,26) de fixation de l'attelage de la remorque, notamment le support transversal arrière (4), sur lequel est fixé l'attelage (3) de la remorque, et éventuellement des éléments de châssis (13,14), qui jouxtent la traverse arrière (4), dans lequel un dispositif (7) de production d'une force longitudinale, qui produit une force longitudinale (F_{L}) agissant dans la direction d'action de la force de traction de la liaison existant entre l'attelage (3) de la remorque et l'oeillet de traction (6), et un dispositif (8) de production d'une force verticale, qui produit une force verticale (F_{V}), qui est perpendiculaire ou approximativement perpendiculaire à la direction d'action de la force de traction, sont accouplés à un élément de liaison et de transmission de force (9), auquel peut être fixé l'oeillet de traction (6), de sorte que la direction d'action (R_{V}) de la force verticale (F_{V}), appliquée par le dispositif (8) de production de la force verticale sur l'élément de liaison et de transmission de force (9), et la direction d'action (R_{L}) de la force longitudinale (F_{L}), appliquée par le dispositif (7) de production d'une force longitudinale à l'élément de liaison et de transmission de force (9) se recoupent dans la zone du point de fixation (B), au niveau duquel l'oeillet de traction (6) peut être fixé à l'attelage (3) de la remorque, qui peut être maintenu fixe.

2. Dispositif selon la revendication 1, caractérisé en ce que l'élément de liaison et de transmission de force (9) est une pièce coudée comportant deux branches (9a,9b) qui font entre elles un angle droit, le dispositif (7) de production de la force longitudinale étant accroché à l'une de ces branches (9a), à laquelle l'oeillet de traction (6) peut être fixé, tandis que le dispositif (8) de production de la force verticale est accroché à l'autre de ces branches (9b).

3. Dispositif selon la revendication 1 ou 2, caractérisé en ce que l'élément de liaison et de transmission de force (9) est guidé dans la direction d'action (R_{L}) de la force longitudinale (F_{L}) et/ou dans la direction d'action (R_{V}) de la force verticale (F_{V}).

4. Dispositif selon la revendication 1 ou 2, caractérisé en ce que l'élément de liaison et de transmission de force (9) est guidé dans le plan contenant la direction d'action (R_{L}) de la force longitudinale (F_{L}) et la direction d'action (R_{V}) de la force verticale (F_{V}), ou dans un plan parallèle à ce plan.

5. Dispositif selon l'une des revendications 1 à 4, caractérisé en ce qu'il est prévu un dispositif de serrage (12), dans lequel on peut serrer les longerons (13, 14), qui peuvent être installés sur la traverse arrière (4) fixant l'attelage (3) de la remorque, et sur lesquels est monté de préférence un dispositif de retenue (16) pour le dispositif (7) de production de la force longitudinale, notamment à la traverse (15) fixant ce dispositif, et ce de préférence sur des côtés longitudinaux dès longerons (13,14), éloignés de la traverse arrière (4).

6. Dispositif selon la revendication 5, caractérisé en ce que la traverse arrière (4) peut être montée sur une des extrémités (13a,14a) des longerons, que l'attelage de remorque (3), qui est fixé à ces longerons, est orienté en direction des autres extrémités (13b,14b) des longerons, au niveau desquels est monté le dispositif de retenue (16), notamment la traverse (15), prévue pour le dispositif (7) de production de la force longitudinale.

7. Dispositif selon la revendication 5 ou 6, caractérisé en ce que la traverse arrière (4) et le dispositif de retenue (16), notamment la traverse (15) prévue pour le dispositif (7) de production de la force longitudinale peuvent être fixés respectivement aux longerons (13,14), et ce en des emplacements différents dans la direction longitudinale de ces longerons.

8. Dispositif selon l'une des revendications 1 à 7, caractérisé en ce que le dispositif (7) de production de la force longitudinale et le dispositif (8) de production de la force verticale sont reliés d'une manière articulée (18,20,21,23) à l'élément de liaison et de transmission de force (9) et/ou leur dispositif respectif de retenue (16, 17).

9. Dispositif selon la revendication 8, caractérisé en ce qu'il est prévu, comme liaisons articulées (18,21,23), des articulations à axes, dont les axes d'articulation sont simultanément perpendiculaires à la direction d'action (R_{L}),R_{V}) ainsi qu'à la force longitudinale (F_{L}) et à la force verticale (F_{V}).

10. Dispositif suivant l'une des revendications 1 à 9, caractérisé par le fait que le dispositif (7) de production de la force longitudinale et/ou le dispositif (8) de production de la force verticale est un dispositif hydraulique à piston et cylindre servocommandé.
